# EUROPEAN PATENT SPECIFICATION

(11) **EP 4 377 061 B1**
(45) Date of publication and mention of the grant of the patent: **09.07.2025**
(21) Application number: 22748414.4
(22) Date of filing: 27.07.2022
(51) Int. Cl.: B29C 33/20, B29C 33/26, B29C 33/30, B29C 33/24

(54) **CLAMPING DEVICE**
SPANNVORRICHTUNG
DISPOSITIF DE SERRAGE

(30) Priority: 28.07.2021 GB 202110855
(43) Date of publication of application: 05.06.2024
(73) Proprietor: DFS Composites Limited, Lee-On-The-Solent, Hampshire PO13 9GW (GB)
(72) Inventor: BAILES, David Frank, Lee-on-the-Solent, Hampshire PO13 9GW (GB)
(74) Representative: Barker Brettell LLP
(86) International application number: PCT/GB2022/051966
(87) International publication number: WO 2023/007154

(56) References cited:
- WO-A1-2010/103490
- CN-U- 207 772 207
- CN-U- 208 913 916
- US-A1- 2017 266 895

## Description

### FIELD OF THE INVENTION

The present invention relates to a clamping device for a mold, for example for a large composite mold, such as a wind turbine blade mold used for the manufacture of a wind turbine blade for a wind turbine generator (WTG).

### BACKGROUND

There are challenges in manufacturing large composite parts. These will be explained in the context of wind turbine blades, as an example, which can be many tens of metres long.

Conventionally, wind turbine blades comprise an outer shell composed of two shell-halves that are joined together, one shell-half defining one surface of the blade, and the other shell-half defining a surface on the opposite side of the blade (in some contexts, each shell-half may alternatively be referred to as a "shell", and this terminology will generally be used in the rest of this document). The two shell-halves may also be referred as the upper shell and lower shell (depending on the orientation in which the blade is fabricated), or the leeward shell and windward shell, or the pressure side (PS) shell and the suction side (SS) shell, based on the aerodynamic shape of the blade. The shell defines a relatively thin surface or skin of the blade. The interior of the blade is generally hollow, except for one or more longitudinal internal structural components that provide the blade with stiffness.

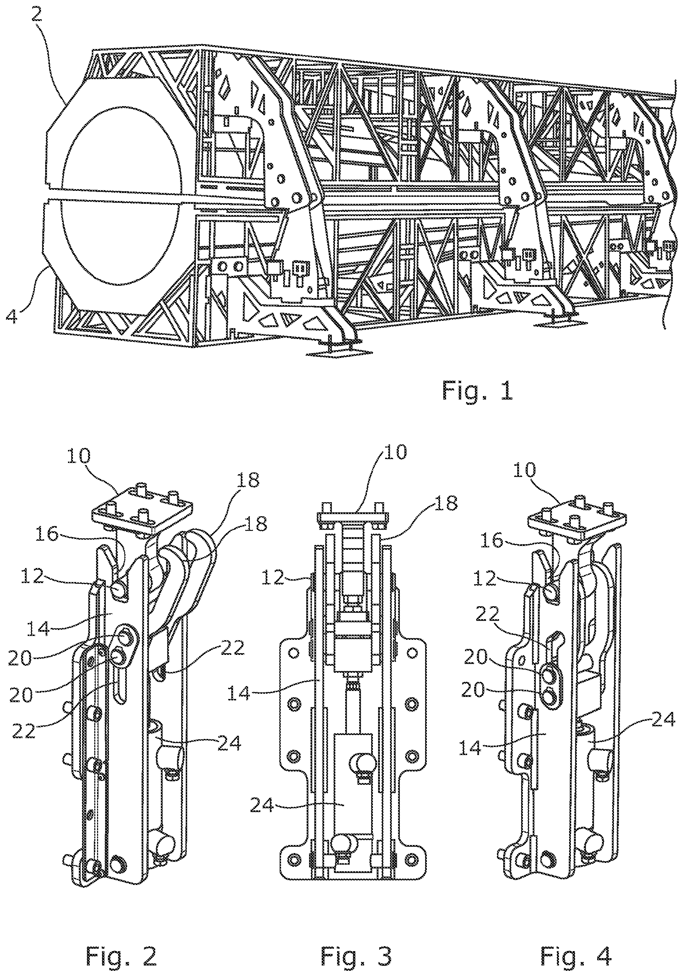

To manufacture a blade, a shell mold is provided for each of the upper shell and lower shell. Each mold defines the shape of the exterior aerodynamic surface of the respective shell portion. Dry fiber materials are laid up in each mold; each mold is bagged; and liquid resin is infused into the fiber. The resin is cured to form each solid shell. Longitudinal internal structural components of one or more spar structures and/or web assembly or web assemblies are bonded into the lower shell. Adhesive is applied to the leading edge (LE) and trailing edge (TE) of the lower shell, as well as to the tops of the internal structural components. Referring to Figure 1, the upper shell mold 2 containing the upper shell (not shown) is then lifted and rotated into position above the lower shell mold 4 containing the lower shell. The upper shell mold 2 is lowered into position on the lower shell mold 4. Clamps (not shown) around the edges of the molds align the mold flanges (and the shells within the molds) and apply a clamping force. The adhesive is cured to an appropriate level such that the two shells are bonded together to form the blade. The clamps are released, the upper mold is removed and the blade is lifted from the lower mold, so that the blade can be taken to a finishing area.

A conventional clamp for the mold will be described with reference to Figures 2 to 6. Figures 2 to 4 show a support 10 which, in use, is bolted to a first mold part (not shown), such as a mold 2 for the upper shell. A fastening pin 12 is fixed to the support 10. A clamp body 14 is bolted to a second mold part (not shown), such as a mold for the lower shell 4. Starting with the clamp in an open state, shown in Figures 2 and 3, as the mold is closed, the fastening pin 12 enters an insertion slot 16 provided in opposing walls of the clamp body 14. Hooks 18 are mounted on guide pins 20 that run in guide slots 22 in walls of the clamp body 14. To close the clamp, a hydraulic cylinder 24 operates to pull the hooks 18, whose movement is controlled by the guide slots 22, such that the hooks 18 firstly pivot over to close the insertion slots 16 and then pull down to engage the fastening pin 12 to apply a clamping force to close the mold. The closed state of the clamp is shown in Figure 4. The clamp can be opened and the mold released by reversing the operation of the hydraulic cylinder.

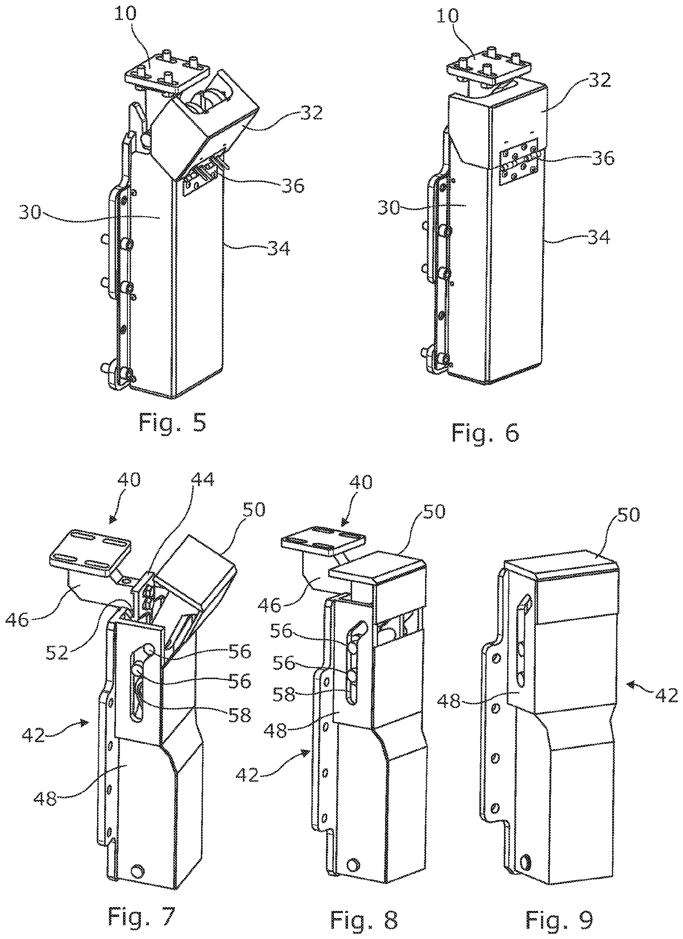

To avoid ingress of objects into the clamp and to ensure operator safety, particularly in the vicinity of the hooks 18, a cover 30 can be provided for the clamp, as illustrated in Figures 5 and 6. The cover 30 is fixed over the clamp body and is made of thin sheet metal. To permit movement of the hooks to the open state of the clamp, the upper portion of the cover 32 is hinged to the main portion of the cover 34 by a hinge 36. The open state of the clamp is shown in Figure 5. When opening the clamp, as the hooks move up and then outward, they push upper portion of the cover 32 out of the way. A spring mechanism (not shown) biases the upper portion of the cover 32 back to the closed position, so that when the clamp is closed, the upper portion of the cover 32 naturally returns to the position shown in Figure 6 covering the clamping mechanism.

A clamp similar to the conventional clamp described above is disclosed in CN 208 913 916 U.

There are a number of problems with this conventional clamp. The moving part of the cover 32 is thin and easily damaged, particularly when in the clamp is in the open state and projecting, so may get caught or impacted. The cover, hinge, and spring bias mechanism require extra parts to be manufactured and assembled, which is time consuming and costly. Furthermore, it is difficult to adjust the alignment of the two parts of the clamp laterally (in a direction along the edge of the mold parts, such as in the spanwise direction for a turbine blade mold). Also, mis-alignment of the hydraulic cylinder in the clamp can cause wear on the cylinder seals which leads to seal bypass, so the cylinder needs to be replaced, resulting in costly production downtime for the mold.

The present invention aims to alleviate, at least partially, some or any of the above problems.

CN 207 772 207 U is considered to represent the closest prior art, and its disclosure forms the basis of the pre-characterizing portion of claim 1.

WO 2010/103490 A1 discloses a clamp with first and second portions and an actuator in the second portion, a catch plate in the second portion and an insertion slot in the first portion. A hook plate is attached to the catch plate and the hook plate is contacted by an engagement part.

### SUMMARY

According to one aspect of the invention there is provided a clamping device as defined in claim 1.

Another aspect of the invention provides mold comprising at least one clamping device according to the preceding aspect of the invention, and said two mold parts.

Further optional aspects of the invention are defined in the dependent claims.

### BRIEF DESCRIPTION OF THE DRAWINGS

Embodiments of the invention will now be described, by way of non-limiting example, with reference to the accompanying drawings. The invention may further comprise, in any combination, any features of the embodiments which will now be described.
**Figure 1** illustrates a portion of a wind turbine blade mold apparatus;
**Figure 2** is a view of a conventional clamp in an open state;
**Figure 3** is a front view of a conventional clamp in an open state;
**Figure 4** is a view of a conventional clamp in a closed state;
**Figure 5** is a view of a conventional clamp, with a cover, in an open state;
**Figure 6** is a view of a conventional clamp, with a cover, in a closed state;
**Figure 7** is a view of a clamping device embodying the invention in an open state;
**Figure 8** is a view of a clamping device embodying the invention in a closed state;
**Figure 9** is a view of a clamping device embodying the invention in a fullyclosed state;
**Figure 10** is a view of a first portion of a clamping device embodying the invention, showing the catch plate and support;
**Figure 11** is a side view of a clamping device embodying the invention in a closed state in cross-section; and
**Figure 12** is an end on view at an intermediate cross-section of a portion of a wind turbine blade mold apparatus including a clamping device according to an embodiment of the invention.

In the drawings, like parts are indicated with like reference numerals, and, for conciseness, description thereof will not be repeated.

### DETAILED DESCRIPTION

An example of a clamping device according to an embodiment of the invention is illustrated in Figures 7 to 11.

The clamping device comprises a first portion 40 fixed in use to a first mold part (such as an upper mold), and a second portion 42 fixed in use to a second mold part (such as a lower mold). The first portion 40 comprises a catch plate 44 attached to a support 46 fixable to the first mold part. The second portion 42 comprises: a clamp body 48 fixable to the second mold part; an engaging part 50; an insertion slot 52; and an actuator 54.

Figure 7 shows the engaging part 50 in an open position in which the catch plate 44 is inserted into the insertion slot 52 along an insertion path, which in this illustration is a vertical path. The catch plate 44 is also removeable from the insertion slot in this condition. The insertion slot 52 is defined by slots in two opposing parts within the clamp body 48, but this is merely one possible arrangement. In alternative embodiments, the slots can be provided in the walls of the clamp body 48, and may be different in number than two. The slots have a flared opening to guide the catch plate 44 on insertion, and then a straight sided portion to constrain the catch plate 44 to align the mold parts. The alignment in the chordwise direction of a wind turbine blade can be adjusted by means of the slotted bolt holes by which the support 46 is attached to the first mold part.

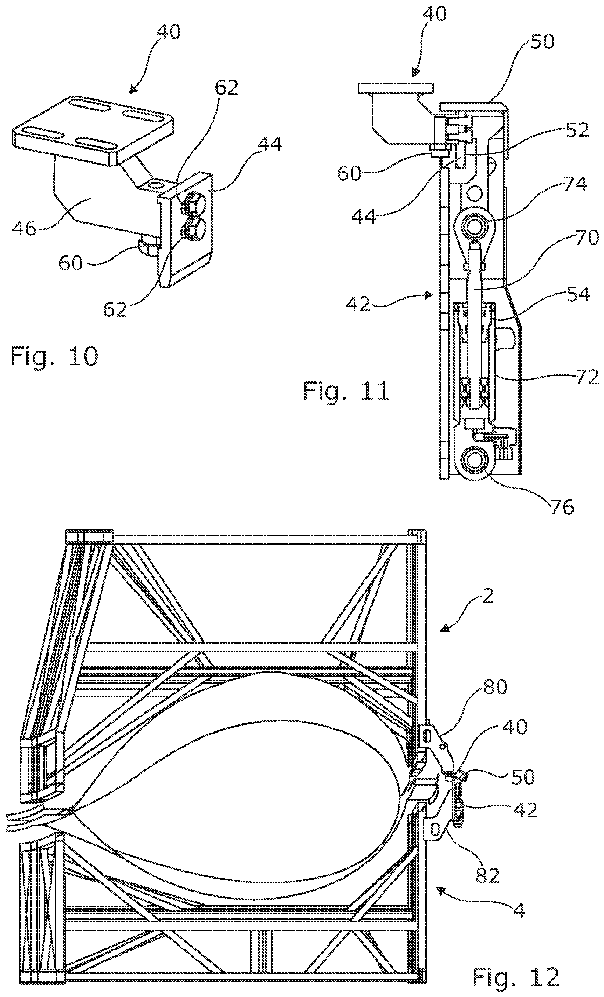

Operating the actuator 54 moves the engaging part 50 between the open position of Figure 7 to a closed position shown in Figures 8 and 11 in which the engaging part 50 rotates over to retain the catch plate in the insertion slot and contacts the catch plate 44 to urge the catch plate along the insertion path with a clamping force for closing the mold parts. The clamping force of each clamp is typically 1 to 2 tonnes force (1000 to 2000 kgf). The motion of the engaging part 50 is governed by co-operation between guide pins 56 and guide slots 58. The engaging part 50 acts as a cover for the end of the clamp body 48

As can be seen, in the preferred embodiment, the engaging part 50 comprises a plate (also known as a gripper plate or engagement plate), and the under-surface of the plate contacts the upper edge of the catch plate 44. When clamping, the engaging part 50 stops moving when the catch plate 44 is pressed against the bottom of the insertion slot 52, in a state shown in Figures 8 and 11. If adjustment of the depth of closure is required (in the illustrated orientation it is in the vertical direction, or a height adjustment), an adjustment screw 60 can be turned (Figures 10 and 11) such that the movement stops when engagement part 50 presses on the catch plate 44 such that the head of the screw 60 is pressed against the back wall of the clamp body 48.

When the clamp is not in use (with the first portion 40 removed), the actuator can move the engaging part 50 down to a fully closed position as shown in Figure 9.

The catch plate 44 is provided with at least one slotted hole 62 through which it is bolted to the support 46 (Figure 10). The slotted hole(s) 62 enable the position of the catch-plate to be adjusted laterally (in a direction along the edge of the mold parts, such as in the spanwise direction for a turbine blade mold). The catch plate 44 can also be replaced if damaged or worn, and this further provides a chordwise alignment feature.

Referring to Figure 11, the actuator 54 comprises two parts 70, 72 that are moveable relative to each other to close and open the clamp, and to provide the clamping force. The first part 70 is coupled to the engaging part 50 by a spherical bearing 74 (such as a spherical plain bearing). The second part 72 is coupled to the clamp body 48 by a spherical bearing 76 (such as a spherical plain bearing). In this embodiment, the outer rings of the respective spherical bearings 74, 76 are attached to the actuator first part 70 and the actuator second part 72. A pin fixed to the engaging part 50 fits through the inner ring of the spherical bearing 74 (the upper spherical bearing in Figure 11); this pin can be one of the guide pins 56. A pin fixed to the clamp body 48 fits through the inner ring of the other spherical bearing 74 (the lower spherical bearing in Figure 11). The spherical bearings 74, 76 permit rotation in the plane of Figure 11, but also permit twisting and rotation not in that plane, for example by a few degrees, such as 8 degrees. Conventionally a clevis fastener and pin, or eye and pin were used as the couplings, and did not have this degree of freedom. If the actuator is not installed perfectly straight in the conventional arrangement, it is subject to undesirable lateral loads.

The actuator 54 can be any suitable form of linear actuator, such as hydraulic, screw, telescopic, electrical, and so forth. The preferred embodiment shown in Figure 11 is a hydraulic actuator with the first part 70 comprising cylinder rod, and the second part 72 comprising a cylinder body. Lateral loading of a hydraulic actuator wears the seals and leads to seal bypass. Spherical bearings avoid lateral load being applied, and so prolong the service life of the hydraulic actuator.

The clamping device of an embodiment of the invention can be used with a mold apparatus, such as for large composite moldings, for example as one or more of the clamping devices on a wind turbine blade mold illustrated in Figure 1. Figure 12 is an end on view at an intermediate cross-section of a portion of a wind turbine blade mold apparatus including a clamping device according to an embodiment of the invention. The first portion 40 of the clamping device is fixed to an arm 80 joined to the framework of the first mold part 2 (upper mold), and the second portion 42 of the clamping device is fixed to an arm 82 joined to the framework of the second mold part 4 (lower mold). Further clamping devices (not shown) are provided on the opposite edge of the mold apparatus, and each edge can have many spaced-apart clamping devices, for example at least ten. The clamping devices apply a constant clamping force during the bonding operation, while the adhesive between the upper shell and lower shell cures to a desired extent.

Although the above description has specifically mentioned manufacturing a wind turbine blade, the invention can also be applied in other embodiments to assembling blade structures such as for wind assisted propulsion of sea transportation vessels. One or more of these blades can typically be vertically mounted on top of the vessel, and is rotatable about the vertical axis. The vessel can be, for example, a cargo container, oil/gas tanker, or grain tanker. The aerodynamic blade or blades utilises wind assistance to augment the conventional propulsion of the vessel, thereby reducing fuel costs and emissions. In this context, a blade may also be called a wing or a sail, but the term 'blade' is used herein to encompass these alternative terms. Thus, every aspect of the present description can be read as disclosing such methods, apparatus and blades by replacing the term "wind turbine" by "shipping vessel".

The invention is defined in the appended set of claims.

## Claims

1. A clamping device for releasably clamping together two mold parts (2, 4), wherein the clamping device comprises a first portion (40) for fixing to a first mold part (2) and a second portion (42) for fixing to a second mold part (4), wherein:
the first portion (40) comprises a catch plate (44) attached to a support (46) fixable to the first mold part (2);
the second portion (42) comprises: a clamp body (48) fixable to the second mold part (4); an engaging part (50); and an insertion slot (52);
wherein the catch plate (44) is insertable into the insertion slot (52) along an insertion path; and
**characterized in that**:
the second portion (42) further comprises an actuator (54);
wherein the actuator (54) is arranged to move the engaging part (50) between a first position in which the insertion slot (52) is open for insertion of the catch plate (44) into the insertion slot (52) along the insertion path, and a second position in which the engaging part (50) contacts the catch plate (44) to urge the catch plate (44) along the insertion path with a clamping force for closing the mold parts (2, 4) and to retain the catch plate (44) in the insertion slot (52).

2. A clamping device according to claim 1, wherein the engaging part (50) comprises a plate that contacts the catch plate (44) and forms a cover for one end of the clamp body (48) when in the second position.

3. A clamping device according to claim 1 or 2, wherein the catch plate (44) and the engaging part (50) both comprise sheet metal.

4. A clamping device according to any preceding claim, wherein a face of a plate comprising the engaging part (50) is arranged to engage an edge of the catch plate (44).

5. A clamping device according to any preceding claim, wherein the catch plate (44) is provided with at least one slotted hole (62) via which it is bolted to the support (46), whereby the position of the catch plate (44) relative to the support (46) is adjustable in a direction perpendicular to the direction of the insertion path.

6. A clamping device according to claim 5, wherein the position of the catch plate (44) relative to the support (46) is adjustable in a direction along the length of a first mold part (2).

7. A clamping device according to any preceding claim, wherein the actuator (54) comprises a first part (70) and a second part (72), moveable relative to each other, wherein the first part (70) is coupled to the engaging part (50) by a spherical bearing (74), and the second part (72) is coupled to the clamp body (48) by a spherical bearing (76).

8. A clamping device according to claim 7, wherein the actuator (54) comprises a hydraulic actuator, the first part (70) comprising one of a hydraulic cylinder and a cylinder rod, and the second part (72) comprising the other of a hydraulic cylinder and a cylinder rod.

9. A mold comprising at least one clamping device (40, 42) according to any preceding claim and said two mold parts (2, 4).

10. A wind turbine blade mold comprising a mold according to claim 9.

## Patentansprüche

1. Klemmvorrichtung zum lösbaren Zusammenklemmen zweier Formteile (2, 4), wobei die Klemmvorrichtung einen ersten Abschnitt (40) zur Befestigung an einem ersten Formteil (2) und einen zweiten Abschnitt (42) zur Befestigung an einem zweiten Formteil (4) umfasst, wobei:
der erste Abschnitt (40) eine Fangplatte (44) umfasst, die an einer Stütze (46) angebracht ist, die an dem ersten Formteil (2) befestigt werden kann,
der zweite Abschnitt (42) Folgendes umfasst: einen Klemmenkörper (48), der an dem zweiten Formteil (4) befestigt werden kann, einen Eingriffsteil (50) und einen Einführungsschlitz (52),
wobei die Fangplatte (44) entlang eines Einführwegs in den Einführungsschlitz (52) einführbar ist und
**dadurch gekennzeichnet, dass**:
der zweite Abschnitt (42) ferner einen Aktuator (54) umfasst,
wobei der Aktuator (54) dazu angeordnet ist, den Eingriffsteil (50) zwischen einer ersten Position, in der der Einführungsschlitz (52) zum Einführen der Fangplatte (44) in den Einführungsschlitz (52) entlang des Einführwegs offen ist, und einer zweiten Position, in der der Eingriffsteil (50) die Fangplatte (44) berührt, um die Fangplatte (44) mit einer Klemmkraft entlang des Einführwegs zu drücken, um die Formteile (2, 4) zu schließen und die Fangplatte (44) in dem Einführungsschlitz (52) zu halten, zu bewegen.

2. Klemmvorrichtung nach Anspruch 1, wobei der Eingriffsteil (50) eine Platte umfasst, die die Fangplatte (44) berührt und in der zweiten Position eine Abdeckung für ein Ende des Klemmenkörpers (48) bildet.

3. Klemmvorrichtung nach Anspruch 1 oder 2, wobei sowohl die Fangplatte (44) als auch der Eingriffsteil (50) Blech umfassen.

4. Klemmvorrichtung nach einem der vorhergehenden Ansprüche, wobei eine Fläche einer Platte, die den Eingriffsteil (50) umfasst, der zur Ineingriffnahme eines Rands der Fangplatte (44) angeordnet ist.

5. Klemmvorrichtung nach einem der vorhergehenden Ansprüche, wobei die Fangplatte (44) mit mindestens einem Schlitzloch (62) versehen ist, über das sie mit der Stütze (46) verschraubt ist, wodurch die Position der Fangplatte (44) relativ zu der Stütze (46) in einer senkrecht zur Richtung des Einführwegs verlaufenden Richtung verstellbar ist.

6. Klemmvorrichtung nach Anspruch 5, wobei die Position der Fangplatte (44) relativ zu der Stütze (46) in einer entlang der Länge eines ersten Formteils (2) verlaufenden Richtung verstellbar ist.

7. Klemmvorrichtung nach einem der vorhergehenden Ansprüche, wobei der Aktuator (54) einen ersten Teil (70) und einen zweiten Teil (72) umfasst, die relativ zueinander beweglich sind, wobei der erste Teil (70) durch ein Kugellager (74) an den Eingriffsteil (50) gekoppelt ist und der zweite Teil (72) durch ein Kugellager (76) an den Klemmenkörper (48) gekoppelt ist.

8. Klemmvorrichtung nach Anspruch 7, wobei der Aktuator (54) einen hydraulischen Aktuator umfasst, wobei der erste Teil (70) einen Hydraulikzylinder oder eine Zylinderstange umfasst und der zweite Teil (72) den bzw. die andere/n eines Hydraulikzylinders und einer Zylinderstange umfasst.

9. Form, umfassend mindestens eine Klemmvorrichtung (40, 42) nach einem der vorhergehenden Ansprüche und die zwei Formteile (2, 4).

10. Windturbinenblattform, umfassend eine Form nach Anspruch 9.

## Revendications

1. Dispositif de serrage permettant de serrer ensemble de manière libérable deux parties de moule (2, 4), le dispositif de serrage comprenant une première partie (40) destinée à être fixée à une première partie de moule (2) et une seconde partie (42) destinée à être fixée à une seconde partie de moule (4) :
la première partie (40) comprenant une plaque d'arrêt (44) fixée à un support (46) pouvant être fixé à la première partie de moule (2).
la seconde partie (42) comprenant : un corps de serrage (48) pouvant être fixé à la seconde partie de moule (4) ;
une partie de mise en prise (50) ; et une fente d'insertion (52) ;
la plaque d'arrêt (44) pouvant être insérée dans la fente d'insertion (52) le long d'un chemin d'insertion ; et
**caractérisé en ce que** :
la seconde partie (42) comprend en outre un actionneur (54) ;
l'actionneur (54) étant conçu pour déplacer la partie de mise en prise (50) entre une première position dans laquelle la fente d'insertion (52) est ouverte pour l'insertion de la plaque d'arrêt (44) dans la fente d'insertion (52) le long du chemin d'insertion, et une seconde position dans laquelle la partie de mise en prise (50) entre en contact avec la plaque d'arrêt (44) pour pousser la plaque d'arrêt (44) le long du chemin d'insertion avec une force de serrage pour fermer les parties de moule (2, 4) et pour retenir la plaque d'arrêt (44) dans la fente d'insertion (52).

2. Dispositif de serrage selon la revendication 1, la partie de mise en prise (50) comprenant une plaque qui est en contact avec la plaque d'arrêt (44) et forme un couvercle pour une extrémité du corps de serrage (48) lorsqu'il est dans la seconde position.

3. Dispositif de serrage selon la revendication 1 ou 2, la plaque d'arrêt (44) et la partie de mise en prise (50) étant toutes deux en tôle.

4. Dispositif de serrage selon l'une quelconque des revendications précédentes, une face d'une plaque comprenant la partie de mise en prise (50) étant conçue pour venir en prise avec un bord de la plaque d'arrêt (44).

5. Dispositif de serrage selon l'une quelconque des revendications précédentes, la plaque d'arrêt (44) étant pourvue d'au moins un trou oblong (62) par l'intermédiaire duquel elle est boulonnée au support (46), moyennant quoi la position de la plaque d'arrêt (44) par rapport au support (46) est réglable dans une direction perpendiculaire à la direction du chemin d'insertion.

6. Dispositif de serrage selon la revendication 5, la position de la plaque d'arrêt (44) par rapport au support (46) étant réglable dans une direction sur la longueur d'une première partie de moule (2).

7. Dispositif de serrage selon l'une quelconque des revendications précédentes, l'actionneur (54) comprenant une première partie (70) et une seconde partie (72), mobiles l'une par rapport à l'autre, la première partie (70) étant accouplée à la partie de mise en prise (50) par un palier sphérique (74), et la seconde partie (72) étant accouplée au corps de serrage (48) par un palier sphérique (76).

8. Dispositif de serrage selon la revendication 7, l'actionneur (54) comprenant un actionneur hydraulique, la première partie (70) comprenant l'un d'un vérin hydraulique et d'une tige de vérin, et la seconde partie (72) comprenant l'autre d'un vérin hydraulique et d'une tige de vérin.

9. Moule comprenant au moins un dispositif de serrage (40, 42) selon l'une quelconque des revendications précédentes et lesdites deux parties de moule (2, 4).

10. Moule pour pale d'éolienne comprenant un moule selon la revendication 9.
